# FASCICULE DE BREVET EUROPEEN

(11) **EP 0 790 440 B1**
(45) Date de publication et mention de la délivrance du brevet: **17.05.2000**
(21) Numéro de dépôt: 97400270.1
(22) Date de dépôt: 06.02.1997
(51) Int. Cl.: F16H 55/36, F16F 15/136

(54) **Poulie**
Riemenscheibe
Pulley

(30) Priorité: 14.02.1996 FR 9601817
(43) Date de publication de la demande: 20.08.1997
(73) Titulaire: SOCIETE FINANCIERE D'ETUDE ET DE DEVELOPPEMENT INDUSTRIEL ET TECHNOLOGIQUE - SOFEDIT, 78280 Guyancourt (FR)
(72) Inventeur: Doremus, Eric, 80310 Belloy Sur Somme (FR); Guevel, Guy, 62390 Auxi-Le-Chateau (FR)
(74) Mandataire: Moncheny, Michel

(56) Documents cités:
- EP-A- 0 241 808
- DE-A- 4 322 710
- DE-C- 4 443 691
- FR-A- 1 396 443

## Description

La présente invention a trait à une poulie perfectionnée destinée à assurer, à la fois, un amortissement des vibrations torsionnelles, c'est-à-dire des vibrations de rotation autour de l'axe de la poulie aux régimes dits critiques, généralement élevés, et un découplage en rotation permettant la filtration de vibrations d'acyclisme aux bas régimes de rotation, entre l'arbre menant et la courroie entraînée par la poulie, par exemple dans le cas d'une poulie calée sur un vilebrequin d'un moteur ou d'une machine à pistons alternatifs.

On sait que les systèmes d'entraînement par poulie et courroie d'éléments rotatifs, par exemple alternateurs, pompes de refroidissement, pompes de climatisation, transmettent à la courroie, ainsi qu'à l'élément qu'elle entraîne, les secousses et vibrations auxquels est soumis l'arbre moteur, par exemple un vilebrequin, ce qui accélère l'usure de la poulie et des éléments entraînés et peut provoquer un mauvais fonctionnement de ces éléments.

Pour remédier à ces inconvénients on a déjà proposé de munir la poulie de moyens d'amortissement des vibrations torsionnelles et de moyens de découplage.

La présente invention se propose de perfectionner de telles poulies, de façon à simplifier considérablement leur construction et leur montage, et, donc, à abaisser leur prix de revient, tout en assurant une diminution considérable des vibrations et des secousses et ceci aux différents régimes de rotation de la poulie, et par conséquent en diminuant la vitesse d'usure de la courroie entraînée par la poulie et en réduisant l'influence des vibrations et irrégularités de l'arbre moteur sur les éléments entraînés.

On connaît déjà dans l'état de la technique, notamment d'après DE-A-43 22 710, une poulie comprenant un moyeu susceptible d'être calé sur un arbre, et une jante agencée pour un contact d'entraînement avec une courroie, dans laquelle la jante est montée mobile en rotation autour d'une partie centrale de moyeu en étant reliée à une partie périphérique de moyeu par un élément de découplage muni d'au moins un organe en élastomère, et où la jante présente une partie cylindrique dont la surface externe entraîne la courroie, cette partie cylindrique se poursuivant par un flasque se dirigeant vers l'axe de rotation de la poulie et présentant à son extrémité centrale un rebord permettant la liaison avec une bague externe d'un roulement.

L'invention a pour objet une poulie du type décrit dans DE-A-43 22 710 et conforme au préambule de la revendication 1, caracterisée en ce que l'élément de découplage est fixé sur la surface interne de la partie cylindrique, et en ce que l'organe en élastomère est une bague continue.

De façon avantageuse l'élément de découplage est constitué d'un organe en élastomère adhérisée entre deux bagues cylindriques métalliques concentriques, dont la bague interne est reliée au moyeu et dont la bague externe est fixée à la jante.

Le moyeu de la poulie peut être entouré d'une masse sismique ou volant d'inertie reliée audit moyeu par un élément d'amortissement en élastomère assurant un amortissement des vibrations torsionnelles, la jante étant reliée à ladite masse sismique par l'élément de découplage.

Il en résulte que l'inertie de la masse sismique se trouve augmentée par une fraction de l'inertie de la masse élastomère de découplage et par l'inertie de la poulie. En conséquence on augmente l'inertie de la fonction d'amortissement des vibrations torsionnelles et il devient possible de réduire les amplitudes vibratoires torsionnelles sur le vilebrequin sans augmenter la masse de la poulie. De plus le mouvement vibratoire torsionnel de la masse sismique est découplé du mouvement rotatoire de la jante qui se trouve donc sensiblement isolée, de sorte que la courroie et les éléments coopérant avec la courroie se trouvent protégés.

En outre, en choisissant convenablement les caractéristiques des élastomères, et notamment leurs raideurs, on peut assurer qu'aux bas régimes de rotation, l'élément d'amortissement élastomère se comporte comme une liaison rigide entre le moyeu et la masse sismique ce qui permet alors à l'élément élastomère, faisant office d'élément de découplage, d'assurer son rôle de filtration sans interférence provoquée par les vibrations torsionnelles.

Dans une forme de réalisation préférée la jante est montée rotative sur le moyeu par l'intermédiaire d'un palier, par exemple un palier lisse, une bague d'oscillation ou un roulement. On assure ainsi une stabilité dimensionnelle parfaite, tout en autorisant le découplage en rotation.

De façon avantageuse l'élément d'amortissement peut présenter la forme d'une bague peu épaisse interposée entre une surface cylindrique périphérique de moyeu et une surface intérieure cylindrique de la masse sismique.

La jante est avantageusement reliée à une partie cylindrique de l'élément sismique, de préférence à la surface externe de cet élément sismique opposée à la surface interne reliée à l'élément d'amortissement en élastomère, par une bague constituant l'élément élastomère de découplage.

Afin de faciliter la fabrication de la poulie on peut avantageusement réaliser le moyeu en deux pièces, à savoir une partie centrale de moyeu usinée, destinée à être calée sur l'axe ou vilebrequin, et une partie périphérique de moyeu fixée ou soudée à la partie centrale de moyeu, et présentant avantageusement une surface cylindrique sur laquelle est disposé une bague ou manchon élastique formant l'élément d'amortissement en élastomère qui se trouve ainsi pris entre ladite partie périphérique de moyeu et la masse sismique.

La liaison entre l'élément élastomère d'amortissement, et les surfaces correspondantes de moyeu et de masse sismique peut être réalisée par simple serrage ou par adhérisation.

Le cas échéant l'inertie de la masse sismique s'augmente encore de la bague de roulement périphérique du roulement.

Toutes les pièces rigides, à l'exception de la partie centrale de moyeu, peuvent être réalisés en tôle emboutie.

La poulie peut encore comporter des moyens de mesure de position et/ou de vitesse, notamment des moyeux à crans ou dentures, par exemple pour coopérer avec un capteur d'impulsions, par exemple dans un montage de roue du type phonique décrit dans la demande de brevet français 91 06 883.

De façon avantageuse, une telle denture peut être prévue sur la masse sismique, par exemple sous forme d'une couronne montée sur la pièce, ou bien d'une denture monobloc avec la masse sismique. Ainsi on augmente encore l'inertie de la masse sismique et on réduit l'influence des vibrations sur la mesure.

Les différentes pièces rigides formant la poulie peuvent être reliées par tout moyen tel que soudage ou, de préférence, emmanchement à force.

D'autres avantages et caractéristiques de l'invention apparaîtront à la lecture de la description suivante, faite à titre d'exemple non limitatif, et se référant au dessin annexé dans lequel :
- la figure 1 représente une vue en coupe axiale d'une poulie selon l'invention ;
- la figure 2 représente une vue en coupe axiale selon une autre forme de réalisation.

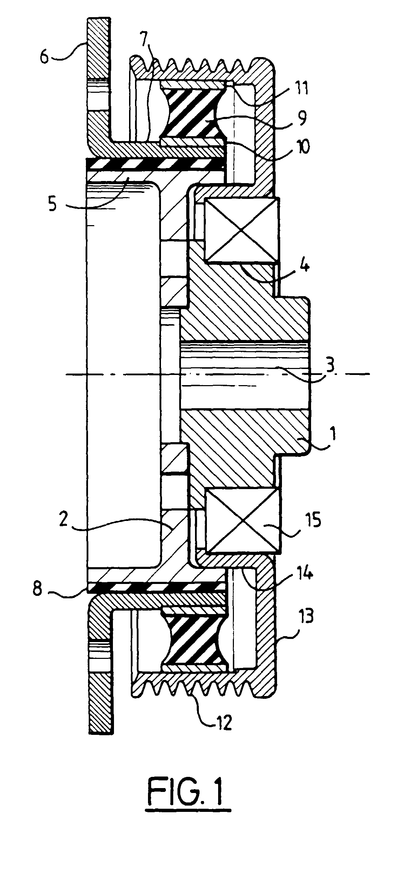

On se réfère à la figure 1.

La poulie représentée sur le dessin comporte un moyeu constitué d'une première partie, centrale, de moyeu 1 et d'une partie périphérique de moyeu 2. La partie centrale de moyeu 1 est avantageusement usinée et présente un alésage central 3 pour le montage et le calage sur un axe, tel qu'un vilebrequin. Ce moyeu usiné présente, à sa périphérie, une surface cylindrique 4.

La partie périphérique de moyeu 2 peut être réalisée, par exemple, en tôle emboutie et peut être soudée à la partie centrale de moyeu 1. Elle comporte un flasque central relié à la partie de moyeu 1 et une partie périphérique cylindrique 5, conférant à la section une forme en T.

La masse sismique 6 ou volant d'inertie est formée d'une tôle emboutie en forme de flasque se poursuivant, en direction de l'axe, par une partie cylindrique 7.

Le diamètre externe de la partie 5 de moyeu périphérique et le diamètre interne de la partie 7 de masse sismique sont différents de façon à permettre la présence d'un premier élément d'élastomère 8 formant l'élément d'amortissement sous forme d'une bague cylindrique en élastomère, susceptible d'être emmanchée sur la partie 5 et recouverte et serrée par la partie 7. En variante l'élastomère peut être adhërisé. La raideur du premier élément en élastomère 8 peut être telle que le mode propre associé à l'ensemble élément 8-masse sismique 6, corresponde sensiblement au premier mode propre torsionnel du vilbrequin au régime critique associé, en vue de réduire l'amplitude des vibrations torsionnelles du vilebrequin.

Sur la surface cylindrique externe de la partie 7 de l'élément sismique 6, munie à cet effet, d'une butée axiale convenable formée par un épaulement, on peut venir emmancher un second élément en élastomère 9, formant l'élément de découplage, sous forme d'une bague élastomère adhérisée entre deux bagues métalliques 10, 11 et ayant une épaisseur radiale nettement différente de celle du premier élément en élastomère 8. La raideur de l'élastomère du second élément 9 est telle que le découplage entre l'élément 12 et le moyeu 1,5 puisse être occurent avec une réduction d'amplitude des vibrations aux bas régimes de rotation du vilebrequin sous l'effet du pouvoir amortisseur de l'élément de découplage 9.

La bague extérieure 11 de cet élément élastomère 9 est fixée contre la surface cylindrique interne d'une jante 12 destinée à l'entraînement d'une courroie (non représentée). La jante 12 présente, du côté de la poulie opposée à l'élément sismique 6, un rebord ou flasque 13 qui se poursuit par un nouveau rebord à angle droit 14, d'allure cylindrique, qui entoure, à distance, la surface 4 de la partie centrale du moyeu 1. Entre cette surface 4 et le rebord 14 on interpose un roulement à billes 15 de sorte que la jante 12 est libre en rotation (bien entendu limitée par les éléments d'amortissement et de découplage) autour du moyeu 1, 2.

De préférence le montage de tous les éléments, à l'exception de la liaison entre les éléments de moyeu 1 et 2, s'effectue par emmanchement à force. Par exemple la bague élastomère 8 est emmanchée sur la partie 5 de jante puis l'élément sismique 6, sur lequel on a préalablement emmanché l'élément 9, est mis en place par emmanchement sur l'élastomère 8. Finalement la jante 12 est emmanchée à force sur la bague extérieure 11 de l'élément 9, après quoi le roulement à billes 15 est emmanché entre la jante 1 et le rebord 14.

En fonctionnement à basse vitesse, les vibrations torsionnelles générées sur l'axe ou vilebrequin, sont quasiment inexistantes de sorte que la bague élastomère 8 se comporte comme une liaison rigide entre le moyeu et la masse sismique 6. Il n'y a alors aucune interférence avec le fonctionnement de l'élément de découplage 9 qui assure la filtration des vibrations d'acyclisme moteur au bas régime de rotation, entre l'axe ou vilebrequin, et la courroie.

Lorsque, à une vitesse de rotation plus élevée, les vibrations torsionnelles à fréquence élevée commencent à apparaître, l'inertie de l'élément sismique se trouve accrue par la présence de l'élément 9 et de la jante 12 tandis que le mouvement vibratoire torsionnel de la masse sismique se trouve découplé du mouvement rotatoire de la jante 12 qui reste ainsi protégée des vibrations torsionnelles.

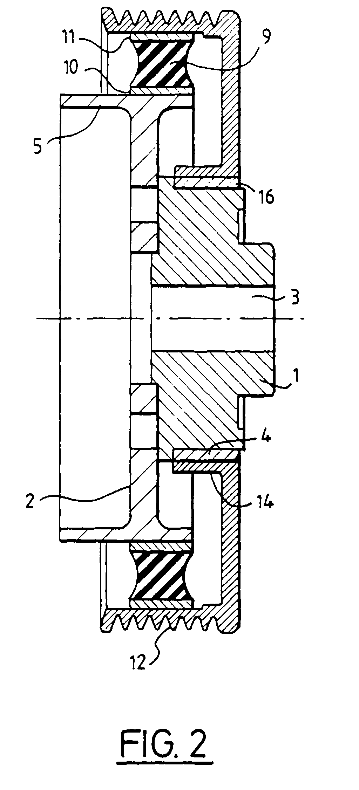

On se réfère à la figure 2.

Dans cette forme de réalisation de l'invention la poulie ne comporte pas la masse sismique 6 ni le premier élément élastomère 8. Au contraire la jante 12 est reliée directement à la partie périphérique de moyeu 5 par l'élément élastomère de découplage 9 dont les deux bagues 10, 11 sont respectivement rendues solidaires de la partie de moyeu 5 et de la jante 12. Dans cette forme de réalisation, la jante 12 est pivotée autour de la partie centrale de moyeu 1 par l'intermédaire d'une bague d'oscillation ou coussinet 16, permettant un glissement en rotation du rebord 14 autour de la surface 4 du moyeu 1. On obtient ainsi une poulie performante et dont le prix de revient peut être particulièrement bas puisque la partie de moyeu 5 et la jante 12 peuvent être réalisées, en tôle, par emboutissage et que la mise en place de l'élément annulaire de découplage 9 et de la bague ou coussinet 16 peut être réalisée par emmanchement à force, le contact entre la bague 16 et le rebord 14 étant glissant.

## Revendications

1. Poulie comprenant un moyeu (1,2) susceptible d'être calé sur un arbre, et une jante (12) agencée pour un contact d'entraînement avec une courroie, dans laquelle la jante (12) est montée mobile en rotation autour d'une partie centrale de moyeu (1) en étant reliée à une partie périphérique (5) de moyeu (2) par un élément de découplage (9, 10, 11) muni d'au moins un organe en élastomère (9) et où la jante (12) présente une partie cylindrique dont la surface externe entraîne la courroie, cette partie cylindrique se poursuivant par un flasque (13) se dirigeant vers l'axe de rotation de la poulie et présentant à son extrémité centrale un rebord (14) permettant, soit la liaison avec une bague externe d'un roulement (15), soit un contact de glissement avec une bague de palier lisse (16), **caractérisée en ce que** l'élément de découplage (9, 10, 11) est fixé sur la surface interne de la partie cylindrique, et **en ce que** l'organe en élastomère (9) est une bague continue.

2. Poulie selon la revendication 1, **caractérisée en ce que** l'élément de découplage (9, 10, 11) comprend deux bagues cylindriques métalliques concentriques (10 11), entre lesquelles l'organe en élastomère (9) est adhérisé, la bague interne (10) étant reliée au moyeu et la bague externe (11) étant fixée à la jante (12).

3. Poulie selon la revendication 1 ou 2, **caractérisée en ce que** le moyeu (1, 2) de la poulie est entouré d'un volant d'inertie (6) relié audit moyeu par un élément d'amortissement (8) en élastomère assurant un amortissement des vibrations torsionnelles, la jante (12) étant reliée au volant d'inertie (6) par l'intermédiaire de l'élément de découplage (9, 10, 11).

4. Poulie selon la revendication 3, **caractérisée en ce que** le volant d'inertie (6) est formé d'une tôle emboutie formant un flanc sensiblement radial et une partie cylindrique (7) dont les faces opposées sont respectivement en contact avec l'élément de découplage (9, 10, 11) et avec l'élément d'amortissement (8).

5. Poulie selon la revendication 3 ou 4, **caractérisée en ce que** l'élément d'amortissement (8) en élastomère présente la forme d'un manchon peu épais interposé entre une surface extérieure cylindrique (5) de moyeu (2) et une surface intérieure cylindrique (7) du volant d'inertie (6).

6. Poulie selon l'une quelconque des revendications 3 à 5, **caractérisée en ce que** la jante (12) est reliée à une partie cylindrique (7) du volant d'inertie (6) par l'intermédiaire de l'élément de découplage (9, 10, 11).

7. Poulie selon l'une quelconque des revendications 1 à 6, **caractérisée en ce que** la jante (12) est montée rotative sur la partie centrale de moyeu (1, 2) par l'intermédiaire d'un palier lisse (16).

8. Poulie selon l'une quelconque des revendications 1 à 7, **caractérisée en ce que** le moyeu est réalisé en deux pièces, à savoir une partie centrale de moyeu (1) usinée, destinée à être calée sur l'axe ou vilebrequin, et une partie périphérique de moyeu (2) fixée ou soudée à la partie centrale de moyeu (1), et présentant une surface cylindrique (5) reliée à l'élément de découplage (9, 10, 11) directement ou par l'intermédiaire d'un élément d'amortissement (8) et d'un volant d'inertie (6)

9. Poulie selon l'une quelconque des revendications 1 à 8, **caractérisée en ce que** les différentes pièces rigides formant la poulie sont reliées par emmanchement à force.

10. Poulie selon l'une quelconque des revendications 1 à 9, **caractérisée en ce qu'**elle comporte des moyens, notamment une denture, de mesure de position ou de vitesse.

## Patentansprüche

1. Riemenscheibe mit einer Nabe (1, 2) zum Festsetzen auf einer Welle und mit einer Felge (12), die zum Antriebskontakt mit einem Treibriemen dient, wobei die Felge (12) drehbeweglich um einen zentralen Teil der Nabe (1) angebracht ist, indem sie mit einem Umfangsteil (5) der Nabe (2) über ein Entkopplungselement (9, 10, 11) verbunden ist, welches mit zumindest einem elastomeren Organ (9) versehen ist, und wobei die Felge (12) einen zylindrischer. Teil aufweist, dessen Außenseite den Treibriemen antreibt, wobei der zylindrische Teil in einen Flansch (13) fortgesetzt ist, der in Richtung auf die Drehachse der Riemenscheibe gerichtet ist und an seinem zentralen Ende einen Rand (14) aufweist, der entweder die Verbindung mit einem externen Laufring (15) oder einem Gleitkontakt mit einem Gleitlagerring (16) erlaubt, dadurch gekennzeichnet, dass das Entkopplungselement (9, 10, 11) auf der Innenseite des zylindrischen Teils befestigt ist, und dass das elastomere Organ (9) ein durchgehender Ring ist.

2. Riemenscheibe nach Anspruch 1, dadurch gekennzeichnet, dass das Entkopplungselement (9, 10, 11) zwei konzentrische zylindrische Metallringe (10, 11) umfasst, zwischen welchen das elastomere Organ (9) zur Haftung gebracht ist, wobei der Innenring (10) mit der Nabe verbunden ist und der Außenring (11) an der Felge (12) befestigt ist.

3. Riemenscheibe nach Anspruch 1 oder 2, dadurch gekennzeichnet, dass die Nabe (1, 2) der Riemenscheibe von einem Schwungkranz (6) umgeben ist, der mit der Nabe durch ein elastomeres Dämpfungselement (8) verbunden ist, welches eine Dämpfung von Torsionsschwingungen sicherstellt, wobei die Felge (12) mit dem Schwungkranz (6) über das Entkopplungselement (9, 10 11) verbunden ist.

4. Riemenscheibe nach Anspruch 3, dadurch gekennzeichnet, dass der Schwungkranz (6) aus einem tiefgezogenen Blech gebildet ist, das eine im wesentlichen radiale Seitenfläche bildet, und aus einem zylindrischen Teil (7), dessen gegenüberliegende Seiten sich jeweils im Kontakt mit dem Entkopplungselement (9, 10, 11) und dem Dämpfungselement (8) befinden.

5. Riemenscheibe nach Anspruch 3 oder 4, dadurch gekennzeichnet, dass das elastomere Dämpfungselement (8) die Form einer nicht sehr dicken Muffe bildet, die zwischen einer zylindrischen Außenseite (5) der Nabe (2) und einer zylindrischen Innenseite (7) des Schwungkranzes (6) angeordnet ist.

6. Riemenscheibe nach einem der Ansprüche 3 bis 5 , dadurch gekennzeichnet, dass die Felge (12) mit einem zylindrischen Teil (7) des Schwungkranzes (6) über das Entkopplungselement (9, 10, 11) verbunden ist.

7. Riemenscheibe nach einem der Ansprüche 1 bis 6, dadurch gekennzeichnet, dass die Felge (12) auf den zentralen Teil der Nabe (1, 2) über ein Gleitlager (16) drehbar angebracht ist.

8. Riemenscheibe nach einem der Ansprüche 1 bis 7, dadurch gekennzeichnet, dass die Nabe zweiteilig gebildet ist, nämlich aus einem spanabhebend hergestellten zentralen Nabenteil (1), der dazu bestimmt ist, auf einer Welle bzw. einer Kurbel festgesetzt zu werden, und aus einem Nabenumfangsteil (2) der an dem zentralen Nabenteil (1) befestigt oder an diesem angeschweißt ist, und eine zylindrische Oberfläche (5) aufweist, die mit dem Entkopplungselement (9, 10, 11) direkt oder unter Zwischenschaltung eines Dämpfungselements (8) und eines Schwungkranzes (6) verbunden ist.

9. Riemenscheibe nach einem der Ansprüche 1 bis 8, dadurch gekennzeichnet, dass die die Riemenscheiben bildenden verschiedenen starren Teile kraftschlüssig verbunden sind.

10. Riemenscheibe nach einem der Ansprüche 1 bis 9, dadurch gekennzeichnet, dass sie Mittel, insbesondere eine Zahnung zur Positionsmessung bzw. zur Drehzahlmessung umfasst.

## Claims

1. Pulley comprising a hub (1, 2), which is capable of being fixed on a shaft, and a wheel rim (12) which is fitted for an actuation contact with a belt, in which pulley the wheel rim (12) is mounted to be moveable in rotation around a central part of the hub (1) by being connected to a peripheral part (5) of the hub (2) by an uncoupling element (9, 10, 11), which is provided at least with one device made of elastomer (9), and where the wheel rim (12) has a cylindrical part, the external surface of which actuates the belt, this cylindrical part being followed by a flange (13) which is orientated towards the axis of rotation of the pulley and said flange having a shoulder (14) on its central extremity allowing either connection with an external collar of a rolling bearing (15) or a sliding contact with a collar of a plain bearing (16), characterised in that the uncoupling element (9, 10, 11) is fixed on the internal surface of the cylindrical part, and in that the device made of elastomer (9) is a continuous collar.

2. Pulley according to claim 1, characterised in that the uncoupling element (9, 10, 11) comprises two concentric cylindrical metallic collars (10, 11), between which the device made of elastomer (9) is affixed, the internal collar (10) being connected to the hub and the external collar (11) being fixed to the wheel rim (12).

3. Pulley according to claim 1 or 2, characterised in that the hub (1, 2) of the pulley is surrounded by an inertia flywheel (6) connected to said hub by a damping element (8) made of elastomer which ensures a damping of the torsional vibrations, the wheel rim (12) being connected to the inertia flywheel (6) by means of the uncoupling element (9, 10, 11).

4. Pulley according to claim 3, characterised in that the inertia flywheel (6) is formed by a pressed plate which constitutes an approximately radial side and a cylindrical part (7), the opposite faces of which are in contact respectively with the uncoupling element (9, 10, 11) and with the damping element (8).

5. Pulley according to claim 3 or 4, characterised in that the damping element (8) made of elastomer has the form of a sleeve which is not very thick and is interposed between an exterior cylindrical surface (5) of the hub (2) and an internal cylindrical surface (7) of the inertia flywheel (6).

6. Pulley according to any of the claims 3 to 5, characterised in that the wheel rim (12) is connected to a cylindrical part (7) of the inertia flywheel (6) by means of the uncoupling element (9, 10, 11).

7. Pulley according to any of the claims 1 to 6, characterised in that the wheel rim (12) is mounted to be rotatable on the central part of the hub (1, 2) by means of a plain bearing (16).

8. Pulley according to any of the claims 1 to 7, characterised in that the hub is constructed in two pieces, i.e. a central machined hub part (1), which is intended to be fixed on the axle or crankshaft, and a peripheral part of the hub (2) which is fixed or welded to the central part of the hub (1) and has a cylindrical surface (5) which is connected to the uncoupling element (9, 10, 11) directly or by means of a damping element (8) and an inertia flywheel (6).

9. Pulley according to any of the claims 1 to 8, characterised in that the different rigid pieces forming the pulley are connected in a force fit.

10. Pulley according to any of the claims 1 to 9, characterised in that it includes means, in particular a toothing, for the measurement of position or speed.
